(19) Europäisches Patentamt

European Patent Office

Office européen des brevets

(11) Veröffentlichungsnummer: **0 361 007 B1**

(12) # EUROPÄISCHE PATENTSCHRIFT

(45) Veröffentlichungstag der Patentschrift:
**18.09.91 Patentblatt 91/38**

(21) Anmeldenummer: **89113488.4**

(22) Anmeldetag: **22.07.89**

(30) Priorität: **12.09.88 DE 3830973**

(43) Veröffentlichungstag der Anmeldung:
**04.04.90 Patentblatt 90/14**

(45) Bekanntmachung des Hinweises auf die
Patenterteilung:
**18.09.91 Patentblatt 91/38**

(84) Benannte Vertragsstaaten:
**ES FR GB IT**

(56) Entgegenhaltungen:
**DE-A- 3 130 081**
**GB-A- 400 315**
**US-A- 1 671 774**

(51) Int. Cl.⁵: **B60B 33/02**

(54) **Festellbare Möbelrolle.**

(73) Patentinhaber: **GROSS + FROELICH GMBH & CO.**
**Müllerstrasse 12-14**
**W-7000 Stuttgart 1 (DE)**

(72) Erfinder: **Harter, Thomas**
**Offenburger Strasse 6**
**W-7030 Böblingen (DE)**

(74) Vertreter: **KOHLER SCHMID + PARTNER**
**Patentanwälte**
**Ruppmannstrasse 27**
**W-7000 Stuttgart 80 (DE)**

EP 0 361 007 B1

Jouve, 18, rue Saint-Denis, 75001 PARIS

## Beschreibung

Die Erfindung betrifft eine feststellbare Möbelrolle mit zwei zu beiden Seiten eines Tragkörpers angeordneten Rädern, die hülsenförmige Nabenteile aufweisen, mit denen sie auf die Enden eines in dem Tragkörper befestigten Achszapfens aufgesteckt sind, mit einem auf dem Achszapfen gelagerten Betätigungshebel, der ein radial über den Umfang der Räder überstehendes äußeres Ende aufweist, mit Arretiergliedern, die durch Verschwenken des Betätigungshebels mit an den Rädern angebrachten Zähnen in Eingriff bringbar sind, und mit am Tragkörper und am Betätigungshebel angebrachten Vorsprüngen und Aussparungen, die in der Raststellung und in der Freistellung des Betätigungshebels miteinander in Eingriff stehen und den Betätigunghebel in der jeweiligen Stellung halten.

Feststellbare Möbelrollen sind in vielen Ausführungsformen bekannt. Bei einer aus der DE-A-3429834 bekannten Möbelrolle weist der auf dem Achszapfen gelagerte Betätigungshebel einen Nocken auf, an dem ein verschiebbares oder verschwenkbares Arretierglied anliegt, das seitlich überstehende Ansätze aufweist, die durch Verstellen des Arretiergliedes mit den innenseiten der Radkränze der Räder in Eingriff bringbar sind. Diese Anordnung erfordert eine relativ komplizierte Ausbildung des Tragkörpers, der entweder mit Führungen für ein verstellbares Arretierglied oder aber mit einem sich an eine federnde Brücke anschließenden Arretierglied versehen sein muß. Auch die Anordnung eines besonderen Arretiergliedes erfordert einen beträchtlichen Aufwand. Die aufwendige Gestaltung des Tragkörpers fällt besonders dann ins Gewicht, wenn er zum Herstellen einer Rolle benutzt werden soll, die keine Arretierglieder zum Feststellen aufweist. Andererseits wäre es unrationell, für feststellbare und nicht feststellbare Möbelrollen unterschiedliche Tragkörper zu verwenden, weil dadurch die Werkzeugkosten steigen und die Lagerhaltung verteuert wird. Da gewöhnlich nicht alle Rollen eines Möbels feststellbar sind, die Rollen eines Möbels aber alle die gleiche Gestaltung haben sollen und der Tragkörper gewöhnlich auch das Aussehen der Rolle bestimmende Elemente umfaßt, erscheint es aus diesem Grunde auch geboten, den gleichen Tragkörper für feststellbare und nicht feststellbare Rollen zu verwenden.

Demgemäß liegt der Erfindung die Aufgabe zugrunde, eine feststellbare Möbelrolle der eingangs genannten Art so auszubilden, daß die Ausbildung des Tragkörpers von der Ausbildung der Feststelleinrichtung weitgehend unabhängig ist und auch die Feststelleinrichtung selbst eine sehr einfache, leicht montierbare und aus einem Minimum aus Teilen bestehende Ausbildung hat.

Diese Aufgabe wird nach der Erfindung dadurch gelöst, daß die Verzahnungen der Räder am Umfang der Nabenteile angebracht sind, daß der Betätigungshebel auf dem Achszapfen mit Radialspiel gelagert ist, daß die Arretierglieder von unmittelbar am Betätigungshebel angebrachten, sich quer zum Betätigungshebel erstreckenden Zähnen gebildet werden und daß die am Tragkörper und am Betätigungshebel vorhandenen Vorsprünge und Aussparungen derart ausgebildet und angeordnet sind, daß sie dem Betätigungshebel beim Verschwenken eine zusätzliche Radialbewegung erteilen, durch welche die Zähne am Betätigungshebel bei dessen Einschwenken in die Raststellung mit den Verzahnungen am Umfang der Nabenteile in Eingriff und beim Verschwenken in die Freistellung außer Eingriff gebracht werden.

Bei der erfindungsgemäßen feststellbaren Möbelrolle weist der Tragkörper lediglich die mit dem Betätigungshebel zusammenwirkenden Vorsprünge und/oder Aussparungen auf, die leicht anzubringen sind und die Herstellung des Tragkörpers, wenn überhaupt, dann jedenfalls nicht nennenswert beeinflussen. Die Feststelleinrichtung umfaßt lediglich ein einziges Teil, nämlich den Betätigungshebel, der mehr oder weniger lose auf dem Achszapfen angeordnet ist und bei der Montage des Achszapfens eingesetzt oder auch fortgelassen werden kann. Trotzdem ist eine außerordentlich sichere Feststellung der Räder gewährleistet, weil die am Betätigungshebel angebrachten Zähne in der Raststellung des Betätigungshebels in eine entsprechende Verzahnung am Umfang der Nabenteile der Räder eingreifen und daher die Räder sicher blockieren. Damit erfüllt die erfindungsgemäße Möbelrolle alle Anforderungen bezüglich einfacher Herstellung und hoher Betriebssicherheit. Da bei der Gestaltung des Tragkörpers auf die Ausbildung der Feststelleinrichtung keine Rücksicht genommen zu werden braucht, bildet die erfindungsgemäße Ausbildung der feststellbaren Möbelrolle auch keinerlei Hindernis für die ästhetische Gestaltung einer solchen Möbelrolle.

Bei einer bevorzugten Ausführungsform der Erfindung weist der Betätigungshebel ein den Tragkörper umgreifendes, gabelförmiges Ende auf, dessen Schenkel mit die Nabenteile der Räder mit Spiel aufnehmenden Augen versehen sind, und es sind die die Arretierglieder bildenden Zähne an den Innenflächen der Augen angeordnet. Es ist ohne weiteres ersichtlich, daß die Ausbildung des Betätigungshebels mit einem den Tragkörper umgreifenden, gabelförmigen Ende zu einer besonders stabilen Ausbildung der Feststelleinrichtung führt, die besonders geringfügige Modifikationen am Tragkörper erfordert. So genügt es, wenn am Rand des in das gabelförmige Ende des Betätigungshebels eingreifenden Abschnittes des Tragkörpers ein Vorsprung angebracht ist, an dem der Betätigungshebel mit seinem die Schenkel seines gabelförmigen Endes verbindenden Abschnitt in der Raststellung anliegt, um zu gewährleisten, daß der Betätigungshebel mit den an den Innenflächen der Augen angeordneten Zähne fest in die am Umfang der Nabenteile angebrachte Zahnung hinein-

EP 0 361 007 B1

gezogen wird und dadurch die Räder sicher arretiert. Das Zusammenwirken mit diesem Vorsprung kann noch dadurch verbessert werden, daß der Betätigungshebel an seinem die Schenkel des gabelförmigen Endes verbindenden Abschnitt einen am Rand des Tragkörpers anliegenden, vorzugsweise Wulstartigen Vorsprung aufweist. Das Anbringen eines solchen Vorsprunges bietet weiterhin die Möglichkeit, am Rand des Tragkörpers neben dem die Raststellung bestimmenden Vorsprung eine rastartige Aussparung anzuordnen, in die der wulstartige Vorsprung in der Freistellung des Betätigungshebels eingreift. Damit ist dann auch der Betätigungshebel in der Freistellung sicher gehalten, ohne daß hierfür ein wesentlicher Aufwand notwendig wäre.

In weiterer Ausgestaltung der Erfindung können die an den Innenflächen der Augen angebrachten Zähne auf einen dem äußeren Ende des Betätigungshebels diametral gegenüberliegenden Abschnitt der Innenflächen begrenzt sein. Dann kann der Betätigungshebel in der Freistellung mit den Innenflächen seiner Augen gefahrlos an der Zahnung auf den Naben der Räder zur Anlage kommen, weil die glatten Flächen keine Eingriffsmöglichkeit bieten. Es können daher die glatten Abschnitte der Innenfläche der Augen zum Abstützen des Betätigungshebels in seiner Freistellung herangezogen werden. Ebenso kann das auf dem Achszapfen gelagerte Ende des Betätigungshebels an seinem in der Betriebsstellung der Rolle oberen Rand eine bogenförmige Kontur aufweisen, mit der der Betätigungshebel an einer am Tragkörper angeordneten Führungsnase anliegt. Auch diese Maßnahme trägt dazu bei, den Betätigungshebel auf sehr einfache Weise schwenkbar zu lagern und ihm zugleich die Radialbewegung zu erteilen, die erforderlich ist, um ihn durch Verschwenken in die Raststellung zugleich mit der Verzahnung am Umfang der Nabenteile in Eingrifff zu bringen. Dabei kann noch am oberen Rand des Betätigungshebels eine Rastnase angeordnet sein, welche die Führungsnase am Tragkörper hintergreift, wenn der Betätigungshebel die Freistellung einnimmt, in der sein wulstartiger Vorsprung in die rastartige Aussparung des Tragkörpers eingreift.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1  eine nach der Erfindung ausgebildete feststellbare Möbelrolle in einem Schnitt längs der Linie I-I in Fig. 2,

Fig. 2  einen Schnitt durch die Möbelrolle nach Fig. 1 längs der Linie II-II, und

Fig. 3  einen Schnitt ähnlich Fig. 1, jedoch mit gelöstem Betätigungshebel.

Die in der Zeichnung dargestellte Möbelrolle weist einen mittleren Tragkörper 1 auf, der nahe einem Rand mit einem Lager 2 zur Aufnahme eines nicht näher dargestellten, in der Gebrauchslage der Rolle vertikalen Gelenkzapfens versehen ist, der zur Befestigung der Rolle an einem Möbelstück dient. Im Abstand von diesem Lager 2 ist in dem Tragkörper 1 ein Achszapfen 3 befestigt, der sich in einer zur Achse des Lagers 2 senkrechten Ebene befindet und in der Gebrauchslage der Möbelrolle horizontal gerichtet ist. Auf die beiden aus dem Tragkörper 1 herausstehenden Enden des Achszapfens 3 sind Räder 4 aufgesteckt, die jeweils aus einem Nabenteil 5 und einem äußeren Radkranz 6 bestehen, der mit dem Nabenteil 5 durch eine nach außen gewölbte Radscheibe verbunden ist. Der Tragkörper 1 weist an einem Teil seines Randes einen der Kontur der Räder 4 folgenden Steg 7 auf. Die Nabenteile 5 stehen etwas in Richtung auf den Tragkörper 1 über die Radkränze 6 vor und sind an ihren Enden an ihrem Umfang mit Zähnen 8 versehen, die im Zusammenwirken mit einem Betätigungshebel 9 das Arretieren der Räder ermöglichen.

Der Betätigungshebel 9 hat ein gabelförmiges Ende, dessen Schenkel 10 den Tragkörper 1 umgreifen und Augen 11 aufweisen, welche die Nabenteile 5 der Räder 4 im Bereich der Zähne 8 mit Spiel umgeben. Der Betätigungshebel 9 weist weiterhin ein unter dem Steg 7 und über den Umfang der Räder 4 hinausragendes Ende auf, das mit einer Trittplatte 12 versehen ist. Der die Schenkel 10 verbindende Abschnitt des Betätigungshebels 9 ist mit einem in Richtung auf den Rand des Tragkörpers 1 gerichteten wulstartigen Vorsprung 13 versehen, der an dem Rand des Tragkörpers 1 anliegt, der ebenfalls einen wulstartigen Vorsprung 14 aufweist, dem nach oben eine rastartige Aussparung 15 benachbart ist. Die Innenflächen der Augen 11 sind an der den Enden der Gabelschenkel zugewandten Seite mit Aussparungen 16 versehen, die zu den Zähnen 8 am Umfang der Nabenteile 5 komplementär sind und ihrerseits Zähne 16' begrenzen.

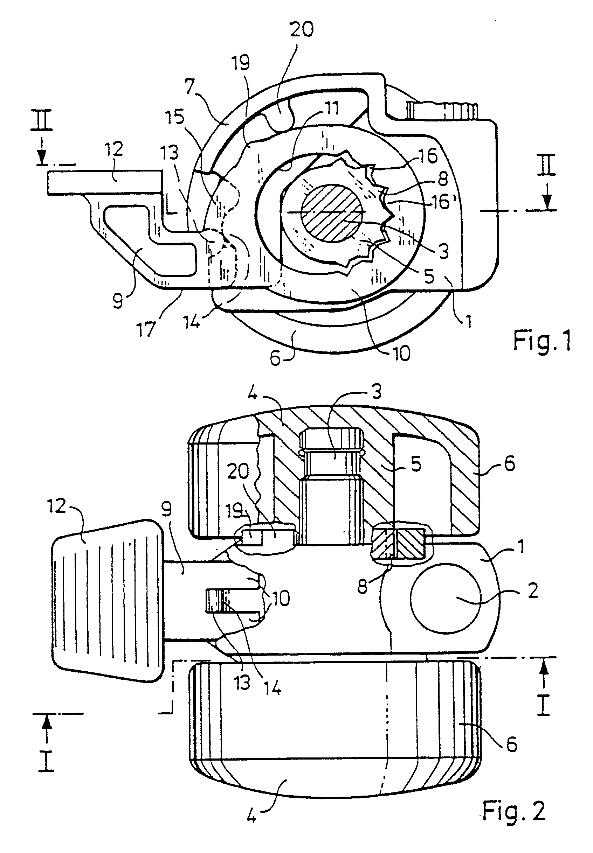

Wie insbesondere aus Fig. 1 ersichtlich, ist die Anordnung so getroffen, daß die Zähne 8 am Umfang der Nabenteile 5 in die komplementären Aussparungen 16 an der Innenseite der Augen 11 eingreifen, wenn der Betätigungshebel 9 eine untere Raststellung einnimmt, in der er mit seinem unteren Rand 17 an einem verbreiterten Abschnitt des Tragkörpers 1 anliegt und der Vorsprung 13 am Betätigungshebel 9 über den Vorsprung 14 am Rand des Tragkörpers 1 etwas hinweggeführt worden ist, so daß eine Art Übertotpunkt-Verriegelung eintritt, die ein sicheres Festhalten des Betätigungshebels 9 in der Verriegelungsstellung gewährleistet. Wie ersichtlich, ist durch das Eingreifen der Zähne 8 in die Aussparungen 16 des Betä-

3

tigungshebels 9 ein Drehen der Räder 4 mit Sicherheit verhindert, so daß die Möbelrolle einwandfrei festgestellt ist.

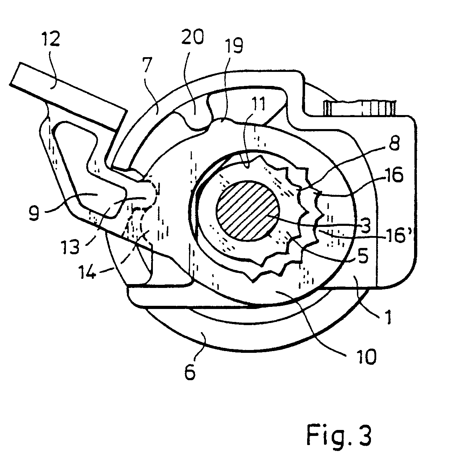

Um die Rolle wieder zu lösen, genügt es, den Betätigungshebel 9, ausgehend von der in den Fig. 1 und 2 dargestellten Lage, gegen den Uhrzeigersinn zu verschwenken, so daß er in die in Fig. 3 dargestellte Lage gelangt. Dabei gleitet der Vorsprung 13 am Betätigungshebel 9 in die dem Vorsprung 14 am Tragkörper 1 benachbarte Aussparung 15, so daß der Betätigungshebel 9 in Richtung seines gabelförmigen Endes gegenüber den Nabenteilen 5 der Räder 4 beweglich wird und die Aussparungen 16 an der Innenseite der Augen 11 die Zähne 8 am Umfang der Nabenteile 5 freigeben können. Der Durchmesser der Augen 11 ist ausreichend groß, um eine solche Bewegung zuzulassen. Außerdem sind etwas oberhalb des mit der Trittplatte 12 versehenen Abschnittes des Betätigungshebels 9 am äußeren Rand der die Augen 11 bildenden Schenkel 10 Rastnasen 19 angeordnet, die mit an der Innenseite des Steges 7 des Tragkörpers 1 angebrachten Führungsnasen 20 in der Weise zusammenwirken, daß das gabelförmige Ende des Betätigungshebels 9 nicht nur die genannte Verschiebung in Richtung des gabelförmigen Endes ausführt, sondern auch nach unten ausgelenkt wird, so daß der Betätigungshebel 9 nicht nur von den Zähnen 8 des Nabenteiles 5 frei ist, sondern in dieser Freistellung auch sicher gehalten ist, wie es Fig. 3 veranschaulicht.

Es ist ersichtlich, daß durch die Erfindung eine sehr einfache Anordnung geschaffen wird, die durch das Eingreifen der am Umfang der Nabenteile 5 angeordneten Zähne 8 in die angebrachten Aussparungen 16 nicht nur an den Innenseiten der Augen 11 des Betätigungshebels 9 eine absolut sichere Arretierung der Räder 4 bewirkt, sondern die auch auf einfache Weise herstellbar und leicht zu handhaben ist. Dabei ist von besonderem Vorteil, daß zum Herstellen einer nicht feststellbaren Möbelrolle lediglich der Betätigungshebel 9 fortgelassen zu werden braucht, weil die an dem Tragkörper 1 und an den Rädern 4 angebrachten Bestandteile der Feststell-Einrichtung weder den Aufbau der dann nicht feststellbaren Möbelrolle stören noch die Herstellung dieser Teile nennenswert verteuern. Am Tragkörper 1 ist lediglich der vordere Rand des zwischen die Schenkel des Betätigungshebels 9 ragenden Abschnittes des Tragkörpers 1 mit einer den Vorsprung 14 und die benachbarte Aussparung 15 bildenden Profilierung versehen. Weiterhin sind an der Innenseite des Steges 7 die Führungsnasen 20 angebracht. Weder die Profilierung am Rand des Tragkörpers 1 noch das Anbringen der Führungsnasen 20 verursacht erhebliche Kosten, und es treten die genannten Führungsnasen 20 und Aussparungen 15 auch nicht störend in Erscheinung. Ebenso wenig ist es störend oder kostspielig, daß die Räder 4 an ihren Nabenteilen 5 die Zähne 8 aufweisen, die bei einer nicht feststellbaren Rolle nicht benötigt werden. Viel wichtiger ist es, daß es zur Herstellung einer feststellbaren Möbelrolle genügt, zu den die nicht feststellbare Möbelrolle ergebenden Teilen den Betätigungshebel 9 hinzuzufügen, der einfach vor dem Einsetzen des Achszapfens 3 mit seinem gabelförmigen Teil über den mittleren Abschnitt des Tragkörpers 1 geschoben werden muß, so daß der in den Tragkörper 1 eingefügte Achszapfen 3 auch die Augen 11 des Betätigungshebel 9 durchdringt. Danach können die Räder 4 in gewohnter Weise mit ihren Nabenteilen 5 auf die Enden des Achszapfens 3 aufgesteckt werden. Daher besteht auch kein nennenswerter Unterschied bezüglich des Arbeitsaufwandes beim Montieren einer nicht feststellbaren oder feststellbaren Rolle.

Es versteht sich, daß die Erfindung nicht auf das dargestellte Ausführungsbeispiel beschränkt ist, sondern Abweichungen davon möglich sind, ohne den Rahmen der Erfindung zu verlassen. So ist die Ausbildung der Feststell-Einrichtung unabhängig von der äußeren Gestaltung der Räder 4 und des Tragkörpers 1, das eine Art Gehäuse für die Räder 4 bildet. Weiterhin könnten zur Verrastung des Betätigungshebels 9 auch federnde Glieder unterschiedlicher Art Anwendung finden. Die in den Schenkeln des Betätigungshebels 9 angebrachten Augen 11 könnten auf ihrem ganzen Umfang mit Rastgliedern versehen sein, und es könnten diese Rastglieder eine andere Querschnittsform haben als die dargestellten Zähne 8. Demgemäß stehen dem Fachmann viele Möglichkeiten zur Verfügung, eine nach der Erfindung ausgebildete Rolle im Hinblick auf den jeweiligen Anwendungszweck und die gewünschte Stilrichtung optimal zu gestalten.

## Patentansprüche

1. Feststellbare Möbelrolle mit zwei zu beiden Seiten eines Tragkörpers (1) angeordneten Rädern (4), die hülsenförmige Nabenteile (5) aufweisen, mit denen sie auf die Enden eines in dem Tragkörper (1) befestigten Achszapfens (3) aufgesteckt sind, mit einem um den Achszapfen (3) schwenkbar gelagerten Betätigungshebel (9), der ein radial über den Umfang der Räder (4) überstehendes äußeres Ende aufweist, mit Arretiergliedern, die durch Verschwenken des Betätigungshebel (9) mit an den Rädern (4) angebrachten Zähnen (8) in Eingriff bringbar sind, und mit am Tragkörper (1) und am Betätigungshebel (9) angebrachten Vorsprüngen (13, 14, 20) und Aussparungen (15), die in der Raststellung und in der Freistellung des Betätigungshebels (9) miteinander in Eingriff stehen und den Betätigungshebel (9) in der jeweiligen Stellung halten, dadurch gekennzeichnet, daß die Zähne (8) der Räder (4) am Umfang der Nabenteile (5) angebracht sind, daß der Betätigungshebel (9) gegenüber dem Achszapfen (3) mit Radialspiel gelagert ist, daß die Arretierglieder von unmittelbar am Betätigungshebel (9) angebrachten, sich quer zum Betätigungshebel erstreckenden Zähnen (16') gebildet werden und daß die am Tragkörper (1) und am Betätigungshebel (9) vorhandenen Vorsprünge (13, 14, 20) und Aussparungen (15) derart ausgebildet und angeordnet sind, daß sie dem Betätigungshebel (9) beim Verschwenken eine zusätzliche Radialbewegung erteilen, durch welche die Zähne (16') am Betätigungshebel (9) bei dessen Einschwenken in die Raststellung mit den Zähnen (8) am Umfang der Nabenteile (5) in Eingriff und beim Verschwenken in die Freistellung außer Eingriff gebracht werden.

2. Möbelrolle nach Anspruch 1, dadurch gekennzeichnet, daß der Betätigungshebel (9) ein den Tragkörper (1) umgreifendes, gabelförmiges Ende aufweist, dessen Schenkel (10) mit die Nabenteile (5) der Räder (4) mit Spiel aufnehmenden Augen (11) versehen sind, und daß die die Arretierglieder bildenden Aussparungen (16) an den Innenflächen der Augen (11) angeordnet sind.

3. Möbelrolle nach Anspruch 2, dadurch gekennzeichnet, daß am Rand des in das gabelförmige Ende des Betätigungshebels (9) eingreifenden Abschnittes des Tragkörpers (1) ein Vorsprung (14) angebracht ist, an dem der Betätigungshebel (9) mit seinem die Schenkel (10) seines gabelförmigen Endes verbindenden Abschnitt in der Raststellung anliegt.

4. Möbelrolle nach Anspruch 3, dadurch gekennzeichnet, daß der Betätigungshebel (9) an seinem die Schenkel (10) des gabelförmigen Endes verbindenden Abschnitt einen am Rand des Tragkörpers (1) anliegenden, vorzugsweise wulstartigen Vorsprung (13) aufweist.

5. Möbelrolle nach Anspruch 4, dadurch gekennzeichnet, daß am Rand des Tragkörpers (1) neben dem die Raststellung bestimmenden vorsprung (14) eine rastartige Aussparung (15) angeordnet ist, in die der wulstartige Vorsprung (13) am Betätigungshebel (9) in dessen Freistellung eingreift.

6. Möbelrolle nach einem der Ansprüche 2 bis 5, dadurch gekennzeichnet, daß die an den Innenflächen der Augen (11) angebrachten Zähne (16') auf einen dem äußeren Ende des Betätigungshebels (9) diametral gegenüberliegenden Abschnitt der Innenflächen begrenzt sind.

7. Möbelrolle nach einem der vorhergehenden Ansprüche, dadurch gekennzeichnet, daß das auf dem Achszapfen (3) gelagerte Ende des Betätigungshebels (9) an seinem in der Betriebsstellung der Möbelrolle oberen Rand eine bogenförmige Kontur aufweist, mit der der Betätigungshebel (9) an einer am Tragkörper (1) angeordneten Führungsnase (20) anliegt.

8. Möbelrolle nach den Ansprüchen 5 und 7, dadurch gekennzeichnet, daß am oberen Rand des Betätigungshebels (9) eine Rastnase (19) angeordnet ist, welche die Führungsnase (20) am Tragkörper (1) hintergreift, wenn der Betätigungshebel (9) die Freistellung einnimmt, in der sein wulstartiger Vorsprung (13) in die rastartige Aussparung (15) des Tragkörpers (1) eingreift.

## Claims

1. Lockable furniture caster comprising two wheels (4) arranged on either side of a supporting body (1), said wheels (4) comprising sleeve-like hub portions (5) by means of which they are fitted on the ends of a pivot (3) mounted in the supporting body (11), comprising further an actuating lever (3) mounted to swing about the pivot (3) and having an outer end projecting radially beyond the circumference of the wheels (4), further stop elements that can be brought into engagement with teeth (8) provided on the wheels (4) when the actuating lever (3) is pivoted, and projections (12, 14, 20) and recesses (15), which are disposed on the supporting body (1) and the actuating lever (9) and which are in engagement with each other in the locked position and in the released position of the actuating lever (9) for retaining the actuating lever (9) in the respective position, **wherein** the teeth (8) of the wheels (4) are disposed about the periphery of the hub portions (5), the actuating lever (9) is mounted with a certain radial play relative to the pivot (3), the locking elements take the form of teeth (16') provided directly on the actuating lever (9) and extending in transverse direction to the latter, and the projections (13, 14, 20) and recesses (15) of the supporting body (11) and the actuating element (9) are designed and arranged in such a way that when the actuating lever (9) is pivoted, they impart to it an additional radial movement by which the teeth (16') of the actuating lever (9) are moved into engagement with the teeth (8) at the circumference of the hub portions (5) when the actuating lever (9) is pivoted into its locked position, and moved out of engagement when the said lever is pivoted into its released position.

2. Furniture caster according to claim 1, wherein the actuating lever (9) comprises a fork-shaped end which embraces the supporting body (1) and whose legs (10) are provided with eyes (10) accommodating the hub portions (5) of the wheels (4) with a certain play, and the recesses (16) constituting the locking elements are arranged on the inner surfaces of the eyes (11).

3. Furniture caster according to claim 2, wherein a projection (14) is provided on the edge of the portion of the supporting body (1) engaged in the fork-shaped end of the actuating lever (9), which projection is in contact with the web portion connecting the legs (10) of the actuating lever (9) in the locked position of the latter.

4. Furniture caster according to claim 3, wherein the web portion for connecting the legs (10) of the fork-shaped end of the actuating lever (9) carries a projection (13), preferably of bead-like shape, which is in contact with the edge of the supporting body (1).

5. Furniture caster according to claim 4, wherein a stop-like recess (15) is provided in the edge of the supporting body (1), beside the projection (14) determining the locked position, for being engaged by the bead-like projection (13) of the actuating lever (9) in the latter's released position.

6. Furniture caster according to any of claims 2 to 5, wherein the teeth (16') provided on the inner surfaces of the eyes (11) are restricted to a section of the said inner surfaces located diametrically opposite the outer end of the actuating lever (9).

7. Furniture caster according to any of the preceding claims, wherein the end of the actuating lever (19) supported by the pivot (3) displays, at its upper edge in the operating position of the furniture caster, a curved contour by which the actuating lever (9) rests against a guide lug (20) on the supporting body (1).

8. Furniture caster according to claims 5 and 7, wherein a detent (19) is arranged on the upper edge of the actuating lever (9), for engaging behind the guide lug (20) on the supporting body (1) when the actuating lever (9) occupies its released position in which its bead-like projection (13) is in engagement with the stop-like recess (15) in the supporting body (1).

**Revendications**

1. Roulette blocable pour meuble avec deux roues (4), disposées des deux côtés d'un support (1), présentant deux parties de moyeu (5) en forme de douille à l'aide desquelles elles sont montées sur les extrémités d'un tourillon (3) fixé dans le support (1), avec un levier de manoeuvre (9) logé de façon pivotable autour du tourillon (3), présentant une extrémité faisant saillie radialement sur la périphérie des roues (4), avec des éléments d'arrêt pouvant être, par pivotement du levier de manoeuvre (9), mis en contact avec des dents (8) se trouvant sur les roues (4) et avec des saillies (13, 14, 20) se trouvant sur le support (1) et sur le levier de manoeuvre (9) et des évidements (15) engrènant en position de crantage et en position dégagée du levier de manoeuvre (9), maintenant ainsi le levier de manoeuvre (9) dans la position adéquate, caractérisée en ce que les dents (8) des roues (4) se trouvent sur la périphérie des parties de moyeu (5), que le levier de manoeuvre (9) est logé avec un jeu radial en face du tourillon (3), que les éléments d'arrêt sont formés par des dents (16') montés directement sur le levier de manoeuvre (9) et disposées transversalement par rapport au levier et que les saillies (13, 14, 20) et les évidements (15) disponibles sur le support (1) et sur le levier de manoeuvre (9) sont conçus et disposés de telle sorte qu'ils imposent au levier de manoeuvre (9), lors du pivotement de ce dernier, un mouvement radial supplémentaire grâce auquel les dents (16') sur le levier de manoeuvre (9) engrènent avec les dents (8) sur la périphérie des parties de moyeu (5) si le levier est pivoté en position d'arrêt et sont dégagées si le levier est pivoté en position dégagée.

2. Roulette pour meuble selon la revendication 1, caractérisée en ce que le levier de manoeuvre (9) est muni d'une extrémité en forme de fourche enveloppant le support (1), dont les branches (10) sont munies de cavités (11) recueillant avec un certain jeu les parties de moyeu (5) des roues (4) et que les évidements (16) formant les éléments d'arrêts sont disposés sur les faces intérieures des cavités (11).

3. Roulette pour meuble selon la revendication 2, caractérisée en ce que sur le bord de la section du support (1) engrènant dans l'extrémité en forme de fourche du levier de manoeuvre (9) se trouve une saillie (14) sur laquelle repose le levier de manoeuvre (9) en position d'arrêt avec sa section reliant les branches (10) de son extrémité en forme de fourche.

4. Roulette pour meuble selon la revendication 3, caractérisée en ce que le levier de manoeuvre (9) présente sur la section reliant les branches (10) de l'extrémité en forme de fourche une saillie (13), de préférence en forme de bourrelet, reposant sur le bord du support (1).

5. Roulette pour meuble selon la revendication 4, caractérisée en ce que sur le bord du support (1) et à côté de la saillie (14) déterminant la position d'arrêt est disposée un évidement (15) en forme d'encoche d'arrêt dans laquelle engrène la saillie (13) en forme de bourrelet sur le levier de manoeuvre (9) en position dégagée de ce dernier.

6. Roulette pour meuble selon l'une des revendications 2 à 5, caractérisée en ce que les dents (16') se trouvant sur les faces intérieures des cavités (11) sont limitées à une section des faces intérieures diamétralement opposée à l'extrémité extérieure du levier de manoeuvre (9).

7. Roulette pour meuble selon l'une des revendications précédentes, caractérisée en ce que l'extrémité du levier de manoeuvre (9) logée sur le tourillon (3) présenté sur le bord supérieur, si la roulette est en position de fonctionnement, un contour en forme d'arc par lequel le levier de manoeuvre (9) repose sur un tenon de guidage (20) disposé sur le support (1).

8. Roulette pour meuble selon les revendications 5 et 7, caractérisée en ce que sur le bord supérieur du levier de manoeuvre (9) se trouve un tenon d'arrêt (19) mordant l'arrière du tenon de guidage (20) sur le support (1) si le levier de manoeuvre (9) est en position dégagée, dans laquelle sa saillie en forme de bourrelet (13) engrène dans l'évidement (15) en forme de cran du support (1).

Fig. 1

Fig. 2

Fig. 3